# DEMANDE DE BREVET EUROPEEN

(11) **EP 2 267 793 A1**
(43) Date de publication de la demande: **29.12.2010**
(21) Numéro de dépôt: 10166278.1
(22) Date de dépôt: 17.06.2010
(51) Int. Cl.: H01L 31/042, H01L 31/048, E04D 13/18, F24J 2/52

(54) **Dispositif de fixation pour panneau**

(30) Priorité: 22.06.2009 FR 0903012
(71) Demandeur: L & T Partners, 1201 Geneve (CH)
(72) Inventeur: Pasquet, Franck, 87110, BOSMIE L'AIGUILLE (FR); Pasquet, Daniel, 74580, VIRY (FR)
(74) Mandataire: Debay, Yves

(57) **Abrégé**

La présente invention concerne un dispositif de fixation pour au moins un panneau (1), comprenant un organe d'accrochage sur une embase fixe, l'organe d'accrochage comprenant au moins un premier mors (2) et l'embase fixe comportant une entretoise (4) dont une extrémité réalise une surface d'appui (S3) pour former un second mors (48), le panneau étant serré entre le premier (2) et le second mors (48), **caractérisé en ce que** l'organe d'accrochage comprend une structure de fixation sur une partie de l'embase fixe de sorte que la distance séparant le premier mors (2) du second mors (48) est déterminée par l'organe d'accrochage.

## Description

L'invention concerne le domaine du bâtiment. La présente invention concerne plus particulièrement la fixation d'un ou plusieurs panneaux, comme par exemple des panneaux photovoltaïques, sur un bâtiment ou sur un terrain.

Les panneaux photovoltaïques, également appelés panneaux solaires, sont par exemple posés à l'extérieur d'un bâtiment, sur le toit ou en façade, pour capter l'énergie solaire et produire de l'électricité. Cependant la fixation de tels panneaux sur un bâtiment, nécessite généralement une structure intermédiaire de support des panneaux, rendant l'ensemble de fixation des panneaux complexe à mettre en oeuvre. De plus les panneaux, par exemple de types panneaux solaires, sont généralement serrés par vissage ou imbriqués, sur la structure de support, ce qui ne protège pas ces panneaux contre le vol.

La présente invention a pour objet de pallier un ou plusieurs inconvénients de l'art antérieur, en créant un dispositif de fixation pour un ou plusieurs panneaux, simple, mécaniquement résistant et sécurisé.

Cet objectif est atteint grâce à un dispositif de fixation pour au moins un panneau, comprenant un organe d'accrochage sur une embase fixe, l'organe d'accrochage comprenant au moins un premier mors et l'embase fixe comportant une entretoise dont une extrémité réalise une surface d'appui pour former un second mors, le panneau étant serré entre le premier et le second mors, **caractérisé en ce que** l'organe d'accrochage comprend une structure de fixation sur une partie de l'embase fixe de sorte que la distance séparant le premier mors du second mors est déterminée par l'organe d'accrochage.

Selon une première variante de l'invention, le dispositif de fixation est **caractérisé en ce que** le premier mors comprend une perforation traversée par une tige qui coopère mécaniquement avec l'entretoise pour s'y fixer, la tige terminant à une extrémité par une tête de diamètre supérieur au diamètre de la perforation du premier mors pour, lors de l'introduction de la tige dans l'entretoise, restreindre l'écartement entre les premier et second mors du dispositif.

Selon une particularité de réalisation, le dispositif de fixation est **caractérisé en ce que** la coopération entre la tige et l'entretoise fait intervenir une tige filetée dont une extrémité interagit avec un alésage taraudé positionné au niveau de l'extrémité de l'entretoise et selon l'axe de l'entretoise, la tête de la tige formant une tête de vissage de diamètre supérieur au diamètre de la perforation du premier mors.

Selon une particularité de réalisation, le dispositif de fixation est **caractérisé en ce que** l'organe d'accrochage comprend un crochet comprenant au moins une zone de contact avec une zone de contact de l'entretoise qui forme le second mors, le crochet comprenant un clip de verrouillage dans une position de serrage dans laquelle le premier mors est à une distance déterminée de serrage du second mors.

Selon une particularité de réalisation, le dispositif de fixation est **caractérisé en ce que** la zone de contact du crochet comprend deux surfaces d'appui opposées, en regard l'une de l'autre, jointes par une surface formant un fond du crochet, les surfaces d'appui opposées présentant une inclinaison de l'une par rapport à l'autre de sorte que la distance qui sépare ces surfaces d'appui au niveau du fond du crochet est inférieure à celle qui sépare ces même surfaces au niveau de l'ouverture du crochet, le clip étant disposé vers l'intérieur du crochet et adjacent à une des surfaces d'appui opposées du crochet.

Selon une particularité de réalisation, le dispositif de fixation est **caractérisé en ce que** la zone de contact de l'entretoise comprend une surface d'appui formant une face de l'évidement de l'entretoise et une surface d'appui voisine du second mors ou appartenant au second mors, une inclinaison entre ces deux surfaces d'appui correspondant à l'inclinaison entre les surfaces d'appui de la zone de contact du crochet.

Selon une particularité de réalisation, le dispositif de fixation est **caractérisé en ce que** le second mors est associé à une platine prolongeant la surface d'appui voisine du second mors, le second mors comprenant une première fente de largeur supérieure à une épaisseur du crochet pour le passage du crochet vers l'évidement de l'entretoise.

Selon une particularité de réalisation, le dispositif de fixation est **caractérisé en ce que**, le clip étant adjacent à la surface d'appui du crochet opposée à la zone de contact du crochet destinée à être en contact avec une zone de contact de l'entretoise qui forme le second mors, la longueur de la surface d'appui adjacente, entre le clip et le fond du crochet, est au moins égale à la largeur intérieure de l'entretoise entre le bord intérieur de l'évidement et la surface extérieure de l'entretoise opposée à cet évidement.

Selon une particularité de réalisation, le dispositif de fixation est **caractérisé en ce que** le second mors est associé avec une platine comprenant au moins une surface plane et comportant un alésage dont la forme est adaptée pour être montée sur une extrémité de l'entretoise.

Selon une particularité de réalisation, le dispositif de fixation est **caractérisé en ce que** la surface plane de la platine en contact avec le panneau accroché par le dispositif est positionnée de niveau avec la surface plane de l'extrémité de l'entretoise qui forme le second mors.

Selon une particularité de réalisation, le dispositif de fixation est **caractérisé en ce que** le crochet réalise une butée latérale contre au moins ledit panneau, au moins un des flans latéraux du crochet, disposés entre le premier et le second mors dans la position de serrage, étant appuyé le long d'un bord latéral dudit panneau.

Selon une particularité de réalisation, le dispositif de fixation est **caractérisé en ce que** la surface du second mors à l'extrémité de la surface d'appui plane de l'extrémité de l'entretoise comprend des moyens d'accroche en relief sur au moins une partie de la surface en contact avec le panneau accroché par le dispositif.

Selon une particularité de réalisation, le dispositif de fixation est **caractérisé en ce que** le premier mors comprend une surface de serrage plaquée contre ledit panneau et se prolongeant par une surface convexe en relief par rapport au panneau.

Selon une particularité de réalisation, le dispositif de fixation est **caractérisé en ce que** l'entretoise est montée sur la structure d'un bâti par l'intermédiaire d'un axe fileté qui interagit d'une part avec un alésage taraudé situé dans l'épaisseur de l'entretoise et ouvert à une de ses extrémités et d'autre part avec un élément taraudé fixé à la structure du bâti.

Selon une autre particularité de réalisation, le dispositif de fixation pour au moins un panneau selon l'invention, **caractérisé en ce que** la platine comporte au moins un moyen de blocage formé par un relief arrangé pour interagir avec au moins une partie du panneau et en limiter le déplacement.

Un autre objet de la présente invention est de proposer un système de fixation pour des panneaux, simple, mécaniquement résistant et sécurisé.

Cet objectif est atteint grâce à un système comprenant des panneaux disposés côte à côte, chaque panneau étant maintenu par une pluralité de dispositifs de fixation selon l'invention, **caractérisé en ce que** l'organe de fixation est monté sur la structure d'un bâti au travers d'un élément de matière étanche et/ou isolante.

L'invention, ses caractéristiques et ses avantages apparaîtront plus clairement à la lecture de la description faite en référence aux figures données à titre d'exemple non limitatif et référencées ci-dessous :
- la figure 1 représente une vue en coupe et de côté de panneaux solaires fixés sur une suface selon une première variante de l'invention ;
- la figure 2 représente une vue de dessus d'un ensemble de plusieurs panneaux selon une variante de l'invention ;
- la figure 3 représente une vue en coupe d'une entretoise d'un dispositif de fixation selon une seconde variante de l'invention ;
- la figure 4 représente une vue en perspective d'une entretoise d'un dispositif de fixation selon une seconde variante de l'invention ;
- la figure 5 représente une vue extérieure de la platine du dispositif de l'invention selon une seconde variante de réalisation ;
- la figure 6 représente une vue en perspective d'un exemple de dispositif de fixation selon une seconde variante de l'invention ;
- la figure 7 représente une vue en perspective de l'organe d'accrochage d'un dispositif de fixation selon une seconde variante de l'invention ;
- la figure 8 représente une vue en perspective d'un dispositif de fixation selon la première variante de réalisation.

Il convient de remarquer que les notions d'« intérieur » et d'« extérieur » sont utilisées pour permettre uniquement la définition d'un positionnement de pièces les unes par rapport aux autres. Bien que ce positionnement ne doive pas être compris de façon limitative, on considérera dans la description qui suit que le dispositif de l'invention participe au positionnement d'un élément sensiblement plan, par exemple de type panneau, sur la surface extérieure d'un bâti. Cet arrangement particulier permet ainsi d'une part de qualifier « d'intérieur » les éléments disposés du coté du bâti et d'autre part de qualifier « d'extérieur » les éléments disposés du coté de l'élément plan.

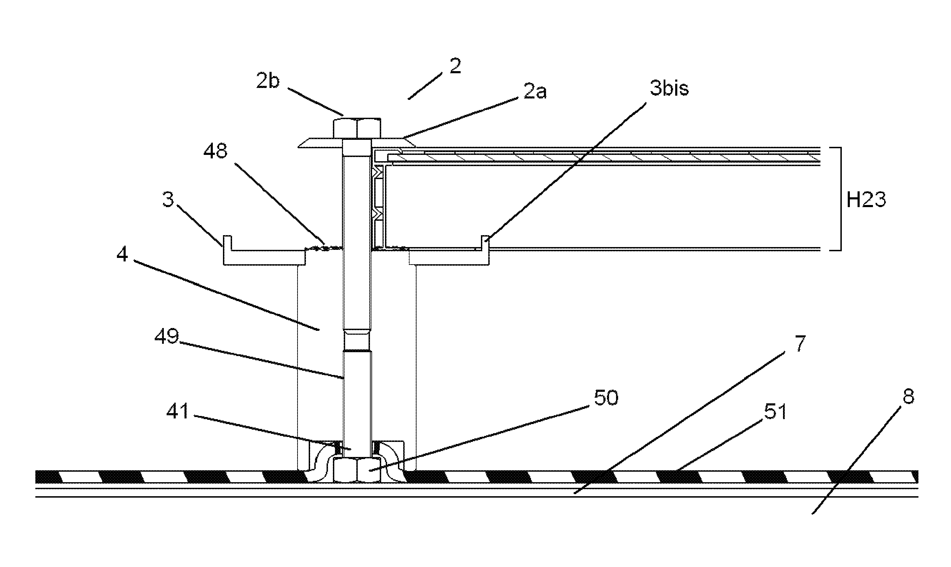

L'invention va à présent être décrite en référence aux figures précédemment citées. Comme représenté à la figure 1, les panneaux, comme par exemple des panneaux solaires, sont maintenus par la périphérie de leur bord et serrés entre un organe d'accrochage, formant un mors (2) extérieur, et une embase formée par une entretoise (4) associée à un mors (48) intérieur. Pour des panneaux (1) solaires disposés sur un toit ou une terrasse, le mors (2) extérieur, disposé contre le panneau, est alors le mors supérieur et le mors intérieur est alors le mors inférieur, mais les panneaux peuvent aussi être fixés sur un mur vertical ou sur une paroi dont la surface extérieure est orientée vers le bas. De manière non limitative, les bords d'un panneau sont réalisés en métal, comme par exemple de l'aluminium. Le dispositif de fixation sera par exemple aussi réalisé en métal. Le mors (2) extérieur est par exemple disposé à la surface du panneau (1) et est apparent. Le mors extérieur est, par exemple, réalisé par la face la plus large d'un tronc de pyramide et est prolongé en son milieu, sur toute sa longueur, par un crochet formé dans une plaque d'épaisseur constante et ayant, à son extrémité, une ouverture latérale. Le panneau peut-être, par exemple, fixé par le dispositif de fixation sur une toiture, une cloison extérieure d'un bâtiment, une dalle en béton, une charpente métallique, une charpente en bois formée d'arbalétriers et de pannes, une charpente traditionnelle avec panne, chevrons et panneaux, une charpente industrialisée de type fermette ou tout autre type de surface.

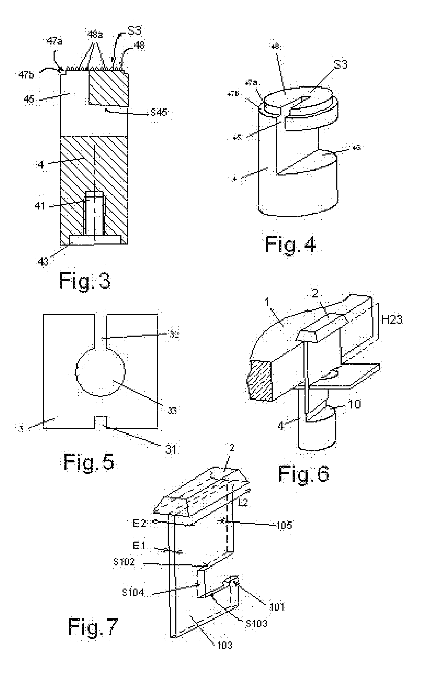

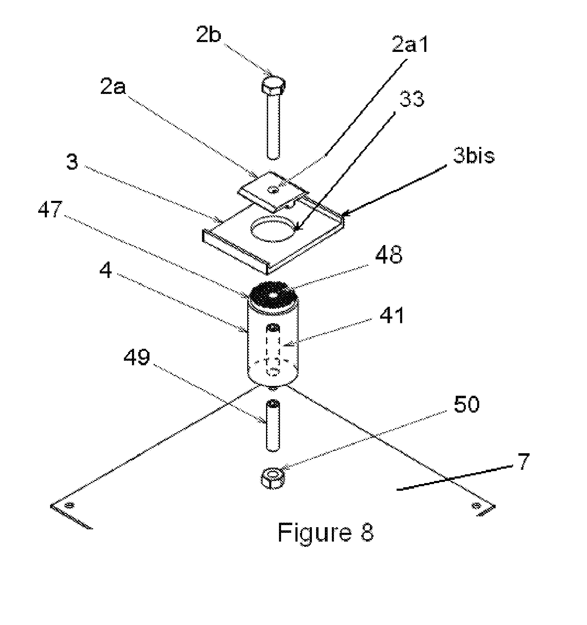

Le mors intérieur (48) est formé par la surface d'une extrémité de l'entretoise (4). Ce mors intérieur (48) se trouve, par exemple, associé à une platine (3) équipée de fentes et d'une couronne de serrage à sa périphérie qui forme un rebord en relief par rapport au reste de la surface plane de la platine. Dans ce type de réalisation, la platine (3) forme un élément intégré à l'extrémité extérieure de l'entretoise (4). Cette platine (3) est formée par un élément structurellement indépendant de l'entretoise (4). La platine comporte un alésage (33) dont la forme est adaptée à la forme de l'extrémité extérieure de l'entretoise (4) afin d'y être montée. Dans l'exemple présenté sur les figures 5 et 8, la forme de l'alésage (33) est circulaire de sorte que la périphérie de l'alésage puisse coopérer avec un rebord du pourtour de l'extrémité cylindrique de l'entretoise (4). Ce rebord forme ainsi une butée (47) grâce à un rétrécissement de la section de l'extrémité de l'entretoise (4). La butée (47) présente ainsi une première surface (47a) destinée à entrer en contact avec le bord intérieur de l'alésage (33) du second mors (3) et une seconde surface (47b), ouverte vers l'extérieur du dispositif et destinée à être en contact avec la surface plane du second mors (3) orientée vers l'intérieur du dispositif et située au niveau de la périphérie de l'alésage (33). Selon un mode de réalisation particulier, la surface (48) de l'extrémité extérieure de l'entretoise (4) qui forme le mors intérieur ou second mors du dispositif est de niveau avec la surface de la platine. Selon une réalisation particulière, la surface (48) de l'extrémité extérieure de l'entretoise (4) comprend des moyens d'accroche (48a) en relief sur au moins une partie de la surface (S3) en contact avec le panneau accroché par le dispositif. Ces moyens d'accroche (48a) peuvent également recouvrir la surface de la platine (3). Selon un mode de réalisation préféré mais non limitatif, les moyens d'accroche (48a) sont réalisés sous la forme de pointes diamants pour garantir l'accroche.

Le mors (48) intérieur est prolongé, par exemple, vers le bâtiment, par une entretoise (4) jointe à un élément de fixation (7) sur le bâtiment. De manière non limitative, une embase peut être fixée sur un bâtiment ou une surface extérieure. Cette fixation s'opère en faisant intervenir l'extrémité intérieure de l'entretoise (4). L'élément de fixation (7) est monté sur la structure d'un bâti au niveau d'un ou de plusieurs éléments d'accroche. La fixation de l'entretoise au niveau de son embase sur l'élément de fixation (7) s'opère par exemple en faisant intervenir un axe fileté (49) qui interagit d'une part avec un alésage taraudé (41) situé au niveau de l'embase et disposé dans l'épaisseur de l'entretoise et d'autre part avec un élément taraudé (50) fixé à la structure du bâti, comme par exemple et de façon non limitative un écrou.

Selon une particularité de réalisation, la platine (3) comporte un ou plusieurs reliefs qui forment des moyens de blocage (3bis) destinés à interagir avec une partie d'un panneau (1) ou du cadre d'un panneau (1). De manière non limitative, ce moyen de blocage (3bis) peut être localisé sur un bord de la platine (3). Ce moyen de blocage (3bis) est arrangé pour être inséré dans un logement du panneau (1) pris en tenaille entre les mors du dispositif de l'invention, ou bien est arrangé pour qu'un bord du moyen de blocage (3bis) entre en contact contre un bord du panneau ou du cadre du panneau (1) de façon à empêcher celui-ci d'être déplacé ou de se retirer de la prise faites par la paire de mors du dispositif.

Selon un mode de réalisation particulier, l'élément de fixation est formé par une plaque montée sur la surface d'un bâti à laquelle il est fixé. Cette fixation peut être opérée par des éléments d'accroche insérés dans la structure du bâti. De façon non limitative, ces éléments d'accroche peuvent être des vis ou des clous. La structure du bâti (8) peut comprendre un bac en acier nervuré. Selon un mode de réalisation particulier, l'élément de fixation est recouvert par une membrane d'étanchéité. La structure en acier, par exemple de la tôle ondulée, équipée de rainures parallèles entre elles et de même profondeur, est par exemple montée et fixée sur une charpente d'un bâtiment. Cette charpente est, par exemple réalisée en bois ou en béton ou en tôle ou en brique ou tout autre matériau de construction pour des cloisons extérieures d'un bâtiment. Les panneaux peuvent aussi être fixés sur une terrasse.

De manière non limitative, le montage de l'embase sur l'élément de fixation peut aussi être opéré par vissage. L'entretoise (4) est, par exemple, dans ce cas, équipée d'un trou (41) borgne taraudé dont l'ouverture est, par exemple, disposée vers une toiture ou une cloison d'un bâtiment. Une tige filetée fixée à la surface de l'élément de fixation (7) et orientée préférentiellement perpendiculairement au plan de l'élément de fixation (7) est vissée dans le trou borgne fileté de l'entretoise (4). De manière non limitative l'entretoise (4) est percée en son centre en s'appuyant sur la surface du bâti. L'extrémité intérieure de l'entretoise destinée à être en contact avec l'élément de fixation (7) peut, de manière non limitative, comprendre une rondelle disposée dans un plan perpendiculaire à l'axe de l'entretoise (4). La rondelle peut comprendre par exemple un logement (43) dans lequel une rondelle élastique d'étanchéité ou un écrou soudé (50) peut être disposé autour de la tige filetée montée sur l'élément de fixation pour améliorer l'étanchéité. Selon une variante du mode de réalisation, l'entretoise (4) ne comprend pas de rondelle et l'usinage du trou borgne (41) s'opère directement dans la colonne depuis l'extrémité intérieure de l'élément de l'entretoise. Il convient de remarquer que la section de l'entretoise (4) peut aussi être de section transversale polygonale, comme par exemple hexagonale ou carrée.

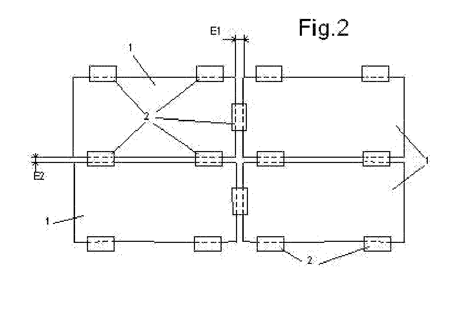

L'entretoise (4) maintient, de manière non limitative, les panneaux solaires à une distance déterminée d'une surface sur laquelle sont fixées les embases des dispositifs de fixation. Une lame d'air est ainsi laissée entre les panneaux solaires et leur surface de fixation. Cette lame d'air en sous face combinée à un intervalle (E1, E2) entre chaque panneau, présenté sur la figure 2, permet par exemple, une dispersion permanente de la chaleur produite par les panneaux solaires. De plus des panneaux solaires, du fait de leur opacité peuvent protéger des UV, l'élément d'étanchéité (51). Une membrane étanche auto protégée peut également être installée en bordure des panneaux pour les zones de l'élément d'étanchéité (51) qui ne sont pas couvertes par au moins un des panneaux positionnés par le dispositif de l'invention.

Les panneaux (1) solaires sont de plus branchés à des dispositifs d'exploitation pour stocker ou utiliser l'énergie produite. Des panneaux solaires rigides peuvent être employés permettant un fort rendement, grâce par exemple à une technologie de type poly ou mono cristallin. La lame d'air permet par exemple de ne pas créer de surchauffe sur la cloison du bâtiment, par exemple pendant les saisons chaudes lorsque toute source générant de la chaleur à l'intérieur du bâtiment doit être évitée.

Plusieurs panneaux solaires sont, par exemple, disposés côte à côte selon un même plan, avec leurs bords adjacents écartés d'une distance (E1, E2) déterminée, comme représenté aux figures 2 et 7. L'écart entre deux panneaux solaires adjacents correspond notamment à l'épaisseur (E21) du crochet lié au mors (2) extérieur, présenté dans une seconde variante de réalisation de l'invention. Une partie du crochet en position verrouillée est, en effet disposée entre le mors (2) extérieur et le mors (48) intérieur, l'épaisseur (E21) du crochet étant, par exemple, faible pour laisser un faible écart entre les panneaux (1) solaires et empêcher d'accéder à l'entretoise (4) par exemple pour voler les panneaux. De cette façon, le retrait des panneaux ne peut pas être réalisé sans une pince spéciale, sans endommager les panneaux.

Comme représenté aux figures 6 et 7, le mors (2) extérieur disposé contre le panneau (1) solaire et à l'opposé de l'entretoise (4) par rapport au mors (48) intérieur, a une largeur (E2) supérieure à celle du crochet. Le mors (2) extérieur dépasse ainsi de chaque côté du crochet, selon l'épaisseur du crochet. Ce dépassement d'au moins un côté du crochet, permet ainsi un appui sur une face extérieure du panneau qui positionné contre un flan latéral du crochet.

De manière non limitative, la longueur de la partie (105) du crochet jointe au mors extérieur est de même longueur (L2) que le mors extérieur. De manière non limitative cette longueur (L2) du mors (2) extérieur peut aussi être supérieure ou inférieure à celle du crochet.

De manière non limitative, le mors extérieur est réalisé avec un profil circulaire, rectangulaire ou carré ou polygonal, le profil étant pris transversalement à l'axe longitudinal de l'entretoise (4). Le mors extérieur est notamment réalisé massif pour résister aux différentes contraintes qui s'exercent sur le panneau ou directement sur le dispositif de fixation.

Le crochet comprend une patte (103) à son extrémité opposée au mors (2) extérieur, s'insérant dans un évidement (45) réalisé, dans l'embase fixe, par exemple dans l'entretoise (4). Cette patte (103) à l'extrémité du crochet exerce un effort de traction du mors (2) extérieur vers le mors (48) intérieur. Le mors (48) intérieur est notamment disposé entre l'évidement (45) de l'entretoise (4) pour le logement de la patte et le mors (2) extérieur. De plus cette patte (103) forme une surface (S103) de contact en regard d'une autre surface (S102) de contact. Ces surfaces (S102, S103) de contact forment des faces opposées du crochet et présentent une inclinaison de l'une par rapport à l'autre. La hauteur d'ouverture du crochet diminue au niveau du fond (S104) du crochet. Le fond (S104) du crochet est, par exemple, une surface plane formant une butée d'arrêt. La surface (S102) de contact interne au crochet et à l'opposé de la patte (103) à l'extrémité du crochet, se termine d'autre part, par un clip saillant (101) à l'opposé du fond (S104) du crochet. Le clip (101) est adjacent et porté par l'extrémité de la patte (103) du crochet qui est opposée à la surface d'appui (S102) du crochet destinée à être en contact avec une zone de contact (48) de l'entretoise (4) formée par l'extrémité extérieure de l'entretoise (4). La longueur de la surface d'appui (S103) du crochet adjacente au clip (101), positionnée entre le clip (101) et le fond (S104) du crochet, est alors au moins égale à la largeur intérieure de l'entretoise entre le bord intérieur de l'évidement (45) et la surface extérieure de l'entretoise (4) qui est opposée à cet évidement (45).

Ainsi l'insertion de l'organe d'accrochage dans l'évidement (45) de l'embase, provoque une déformation de l'organe d'accrochage, jusqu'à ce que le clip (101) se bloque à l'extrémité de la surface de contact (S45) de l'entretoise. Concomitamment, le relief par exemple en couronne ou en diamant (48) qui recouvre l'extrémité extérieure de l'entretoise (4) et/ou la surface de la platine du mors (3) présente une rainure sans relief destiné à recevoir la surface (S102) du crochet.

Les surfaces (S102, S103) de contact inclinées à l'intérieur du crochet sont plaquées contre les surfaces de contact (S3, S45) correspondantes de l'entretoise. La figure 6 représente notamment l'organe d'accrochage en cours d'insertion dans l'embase. De manière non limitative, l'organe d'accrochage verrouillé sur l'embase fixe, forme avec l'embase, un ensemble symétrique par rapport à un plan coupant le crochet selon une demi-épaisseur. De manière non limitative la surface (S104) formant le fond du crochet, les deux surfaces d'appui opposées (S103, S102) du crochet et les deux surfaces (S3, S45) d'appui appartenant à l'embase, forment chacune une surface plane.

De manière non limitative, le mors (48) intérieur étant associé par une platine dépassant de part et d'autre de la surface (S3) de contact avec le crochet, une fente (32) de passage du crochet est aménagée dans la platine, comme présenté à la figure 5. La fente (32) de passage pour le crochet est arrangée pour se prolonger par l'évidement (45) qui s'étend dans la largeur de l'entretoise (4). De manière non limitative, l'évidement (45) dans l'entretoise est réalisé traversant ou non. De manière non limitative, la platine (3) s'étend tout autour de l'extrémité de l'entretoise (4) qui forme le mors intérieur (48) et a par exemple une forme circulaire ou polygonale, comme par exemple rectangulaire, carrée ou hexagonale. La platine comprend par exemple en son centre, la surface (S3) plane d'appuie contre une surface (S102) du crochet. Cette surface (S3) est, par exemple, dans le prolongement de la surface de la platine (3). La surface (S3) d'appui contre le crochet, se termine par exemple, d'autre part, par l'évidemment (32) pour le passage du crochet. L'évidement (32) dans la platine, est, par exemple, disposé à l'opposé de l'évidement pour le clip par rapport à la surface (S3) d'appui sur le crochet.

Lors d'une réalisation faisant intervenir des moyens d'accroche (48a) saillants, le serrage est susceptible d'entraîner une déformation du cadre du panneau positionné puisque les moyens d'accroche sont disposés à l'extrémité extérieure de l'entretoise (4). Toutefois, au niveau de la surface du mors intérieur (48), les moyens d'accroche sont séparés de part et d'autre d'une rainure sur la surface (48) de l'extrémité de l'entretoise (4). Cette rainure est agencée pour être positionnée d'une part dans le prolongement de l'évidement (45) situé dans l'entretoise (4) et d'autre part dans le prolongement de la fente (32) pour le crochet dans la platine. La rainure au niveau de cette surface (48) est destinée à entrer en contact avec la surface intérieure (S102) du crochet qui se positionne contre l'extrémité extérieure de l'entretoise (4).

L'évidement (45) dans l'entretoise est par exemple en partie dans le prolongement de l'évidement pour le passage du crochet et comprend une partie décalée plus en profondeur dans l'épaisseur de l'entretoise (4) de sorte qu'une surface (S45) d'appui soit réalisée dans l'évidement (45). Cette surface (S45) se trouve alors orientée de façon à faire face vers l'intérieur du dispositif, c'est-à-dire en étant orientée vers une face opposée à la surface (S3) de l'extrémité extérieure de l'entretoise (4).

Le crochet dans une position verrouillée, comme représenté aux figures 6, permet de positionner les deux mors (2, 3) en vis-à-vis l'un de l'autre, à une distance déterminée l'un de l'autre et avec leur surface d'appui sur le ou les panneaux (1), parallèles entre elles.

De manière non limitative, le fond (S104) du crochet forme aussi une surface d'appui contre l'embase, le profil du crochet correspondant, par exemple, au profil de l'embase.

Selon une variante de réalisation de l'invention, présentée sur la figure 8, le dispositif de fixation comprend un premier mors (2a) formé par une plaque sensiblement plane et comportant une perforation (2a1) destinée à être traversée par une tige (2b) qui coopère mécaniquement avec la structure de l'entretoise (4), l'entretoise permettant une séparation entre le second mors (48) et la surface d'un bâti sur lequel est monté le dispositif de l'invention. Le second mors (48) présente une surface sensiblement plane qui comporte un évidement en son centre de sorte qu'il se positionne au niveau de l'extrémité plane de l'entretoise en entourant la surface d'appui portée par l'entretoise.

Selon un mode de réalisation préféré, la tige (2b) de positionnement du premier mors (2a) comporte un filetage qui interagit avec un alésage taraudé de l'entretoise. Cet alésage taraudé est positionné au niveau de la surface d'appui de l'entretoise et selon un axe préférentiellement parallèle à l'axe de l'entretoise. Le diamètre de la tige (2b) est inférieur au diamètre de la perforation de la surface du premier mors (2a). En revanche, la tête de la tige filetée présente un diamètre au moins supérieur au diamètre de la perforation de sorte que la tête de la tige forme un moyen de blocage du coulissement du premier mors (2a) le long de la tige. Lors de la fixation de la tige filetée dans l'alésage taraudé de l'entretoise, grâce à la tête de la tige qui bloque le déplacement du premier mors, le vissage de la tige entraîne un rapprochement du premier mors (2a) vers le second mors (3) monté sur l'extrémité de l'entretoise et permet ainsi un pincement d'au moins un panneau entre les mors du dispositif. Selon un mode de réalisation préféré de cette variante de l'invention, la tête de la tige est arrangée pour faciliter le vissage.

Ainsi dans une position verrouillée présentée aux figures 1 et 6, les surfaces d'appui du crochet sont disposées contre des surfaces d'appui de l'embase, l'ajustement précis permettant de positionner précisément le dispositif de serrage par rapport à l'embase. Une distance entre les deux mors de serrage peut ainsi être réalisée avec précision. L'écart (H23) de serrage correspond en effet à une hauteur du même ordre de grandeur que l'épaisseur d'un panneau, tel qu'un panneau solaire, pour réaliser un ajustement serré ou à force. Un rebord fin et saillant à la périphérie d'un des deux mors, permet par exemple une légère déformation et un serrage du panneau, de même qu'un usinage pointe diamant sur l'extrémité extérieure de l'entretoise, qui aura la même fonction d'accroche.

Dans la variante de réalisation présentée sur les figures 6 et 7, le clip (101) du crochet pénétrant dans la fente prévue dans l'embase, permet de verrouiller cette position. Une pince spécialement conçue, permet par exemple d'appliquer un serrage transversal par rapport à l'axe longitudinal du dispositif de fixation, pour faire pénétrer l'organe d'accrochage dans le trou prévu dans l'embase. Le panneau est pris en étau entre les deux mors (2, 48) qui se rapprochent grâce au profil de l'intérieur du crochet, ainsi que grâce à la pénétration des pointes ou de la couronne dans le cadre du panneau positionné par le dispositif. Une surface d'appui intérieure du crochet, orientée vers l'extérieur du panneau, se déplace en effet vers la paroi équipée en panneaux, lors de l'insertion du crochet. De façon avantageuse, ce profil simple à réaliser pourra être usiné avec une bonne précision. De plus les temps de pose des panneaux sont particulièrement réduits. La résistance mécanique du dispositif de fixation des panneaux est aussi améliorée puisque les dispositifs de fixation sont directement fixés à la structure porteuse, sans nécessiter de cadre intermédiaire, y compris dans le cas d'un mur ayant une isolation extérieure. Le dispositif de fixation est en effet particulièrement léger. De manière non limitative, chaque panneau peut être fixé par trois ou quatre dispositifs de fixation voire plus. Le démontage est avantageusement difficile, chaque dispositif de fixation serrant fortement le panneau et devant être démonté pour pouvoir désolidariser le panneau. De plus du fait du faible écartement entre les panneaux adjacents, le dispositif de fixation reste difficilement accessible. Le faible écartement empêche, par exemple, de détruire l'embase du dispositif de fixation pour voler le panneau solaire. Le démontage reste cependant possible, l'embase du dispositif de fixation restant par exemple fixée sur la surface équipée en panneaux photovoltaïques, lors du démontage avec un outil spécialisé.

De plus l'absence d'ossature permet, par exemple, de suivre des formes de parois à équiper convexes, concaves ou hélicoïdales. Le dispositif de fixation qui est compact reste peu apparent et esthétique à la surface d'un panneau solaire, lorsque les panneaux constituent l'enveloppe finale d'un toit ou d'un mur d'un bâtiment.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif de fixation pour au moins un panneau (1), comprenant un organe d'accrochage sur une embase fixe, l'organe d'accrochage comprenant au moins un premier mors (2) et l'embase fixe comportant une entretoise (4) dont une extrémité réalise une surface d'appui (S3) pour former un second mors (48), le panneau étant serré entre le premier (2) et le second mors (48), **caractérisé en ce que** l'organe d'accrochage comprend une portion arrangée pour permettre sa_fixation sur une partie de l'embase fixe de sorte que la distance séparant le premier mors (2) du second mors (48) est déterminée par l'organe d'accrochage et **en ce que** le second mors (48) est associé avec une platine (3) comprenant au moins une surface plane et comportant un alésage dont la forme est adaptée pour être montée sur une extrémité de l'entretoise (4).

2. Dispositif de fixation pour au moins un panneau (1) selon la revendication 1, **caractérisé en ce que** le premier mors comprend une perforation traversée par une tige (2b) qui coopère mécaniquement avec l'entretoise (4) pour s'y fixer, la tige terminant à une extrémité par une tête de diamètre supérieur au diamètre de la perforation (2a) du premier mors (2) pour, lors de l'introduction de la tige dans l'entretoise, restreindre l'écartement entre les premier et second mors du dispositif.

3. Dispositif de fixation selon la revendication 2, **caractérisé en ce que** la coopération entre la tige et l'entretoise fait intervenir une tige filetée (2b) dont une extrémité interagit avec un alésage taraudé (41) positionné au niveau de l'extrémité de l'entretoise et selon l'axe de l'entretoise, la tête de la tige formant une tête de vissage de diamètre supérieur au diamètre de la perforation du premier mors (2).

4. Dispositif de fixation pour au moins un panneau (1) selon la revendication 1, **caractérisé en ce que** l'organe d'accrochage comprend un crochet comprenant au moins une zone de contact (S102) avec une zone de contact de l'entretoise qui forme le second mors (48), le crochet comprenant un clip de verrouillage (101) dans une position de serrage dans laquelle le premier mors est à une distance déterminée de serrage du second mors (48).

5. Dispositif de fixation selon la revendication 4, **caractérisé en ce que** la zone de contact du crochet comprend deux surfaces d'appui (S102, S103) opposées, en regard l'une de l'autre, jointes par une surface (S104) formant un fond du crochet, les surfaces d'appui opposées (S102, S103) présentant une inclinaison de l'une par rapport à l'autre de sorte que la distance qui sépare ces surfaces d'appui au niveau du fond du crochet est inférieure à celle qui sépare ces même surfaces au niveau de l'ouverture du crochet, le clip étant disposé vers l'intérieur du crochet et adjacent à une des surfaces d'appui opposées du crochet.

6. Dispositif de fixation selon la revendication 4 ou 5, **caractérisé en ce que** la zone de contact de l'entretoise comprend une surface d'appui formant une face d'un évidement (45) de l'entretoise et une surface d'appui voisine du second mors ou appartenant au second mors, une inclinaison entre ces deux surfaces d'appui correspondant à l'inclinaison entre les surfaces d'appui de la zone de contact du crochet.

7. Dispositif de fixation selon une des revendications 4 et suivantes, **caractérisé en ce que** le second mors (48) est associé à une platine (3) prolongeant la surface (S3) d'appui voisine du second mors, le second mors comprenant une première (32) fente de largeur supérieure à une épaisseur (E21) du crochet pour le passage du crochet vers l'évidement (45) de l'entretoise.

8. Dispositif de fixation selon une des revendications 4 et suivantes, **caractérisé en ce que**, le clip (101) étant adjacent à la surface d'appui (S103) du crochet opposée à la zone de contact (S102) du crochet destinée à être en contact avec une zone de contact de l'entretoise qui forme le second mors (48), la longueur de la surface d'appui (S103) adjacente, entre le clip (101) et le fond (S104) du crochet, est au moins égale à la largeur intérieure de l'entretoise (4) entre le bord intérieur de l'évidement (45) et la surface extérieure de l'entretoise (4) opposée à cet évidement (45).

9. Dispositif de fixation selon la revendication 9, **caractérisé en ce que** la surface plane de la platine (3) en contact avec le panneau accroché par le dispositif est positionnée de niveau avec la surface plane de l'extrémité de l'entretoise (4) qui forme le second mors (48).

10. Dispositif de fixation selon l'une des revendications 4 à 10, **caractérisé en ce que** le crochet réalise une butée latérale contre au moins ledit panneau (1), au moins un des flans latéraux du crochet, disposés entre le premier et le second mors (48) dans la position de serrage, étant appuyé le long d'un bord latéral dudit panneau.

11. Dispositif de fixation selon l'une des revendications précédentes, **caractérisé en ce que** la surface du second mors (48) à l'extrémité de la surface d'appui plane de l'extrémité de l'entretoise (4) comprend des moyens d'accroche en relief sur au moins une partie de la surface en contact avec le panneau accroché par le dispositif.

12. Dispositif de fixation selon l'une des revendications précédentes, **caractérisé en ce que** le premier mors comprend une surface de serrage plaquée contre ledit panneau et se prolongeant par une surface convexe en relief par rapport au panneau.

13. Dispositif de fixation selon l'une des revendications précédentes, **caractérisé en ce que** l'entretoise est montée sur la structure d'un bâti par l'intermédiaire d'un axe fileté (49) qui interagit d'une part avec un alésage taraudé (41) situé dans l'épaisseur de l'entretoise et ouvert à une de ses extrémités et d'autre part avec un élément taraudé (50) fixé à la structure du bâti.

14. Dispositif de fixation pour au moins un panneau (1) selon l'une des revendications précédentes, **caractérisé en ce que** la platine (3) comporte au moins un moyen de blocage (3bis) formé par un relief arrangé pour interagir avec au moins une partie du panneau (1) et en limiter le déplacement.

15. Système comprenant des panneaux disposés côte à côte, chaque panneau étant maintenu par une pluralité de dispositifs de fixation selon la revendication 11, **caractérisé en ce que** le dispositif de fixation est monté sur la structure d'un bâti au travers d'un élément de matière (51) étanche et/ou isolante.
